# EUROPEAN PATENT APPLICATION

(11) **EP 2 743 830 A1**
(43) Date of publication of application: **18.06.2014**
(21) Application number: 12380054.2
(22) Date of filing: 13.12.2012
(51) Int. Cl.: G06F 9/54

(54) **Flexible data communication among partitions in integrated modular avionics**

(71) Applicant: EUROCOPTER ESPAÑA, S.A., Albacete (ES)
(72) Inventor: Catalan Alarcon, José Antonio, 02006 Albacete (ES); Esparcia Perez, Antonio, 02400 Hellin Albacete (ES)
(74) Representative: GPI & Associés

(57) **Abstract**

In an aircraft (1), a distributed architecture compliant to the specification ARINC653 forms an IMA (3) with Partitions (5) in hardware Modules (6), where shared memories (13) are mapped with shared I/O memory (20).

For flexible communication among Partitions (5), a circular buffer (19) and a concurrent programming algorithm (23) are coupled to each shared I/O memory (20). A Publisher Component (16) builds new messages with datum and topics (21). A Subscriber Component (17) goes through a local message buffer searching for those ones matching a topic (21). A selective communication is performed by elected areas of the shared I/O memory (20). Finally are set as read previously delivered messages in order to prevent duplicated readings.

The invention is distinct from data transfer via classical channels, thus being useful to obtain high reusability, portability and scalability.

## Description

The technical field of the invention relates to aircrafts. For instance, the invention is useful to rotary wing aircrafts like helicopters. The invention relates to airborne computing systems. These specific and demanding systems define the skilled man in the art as a specialist of airborne computing and electronics.

In aircrafts, some airborne computing systems operate so called Integrated Modular Avionics (IMA). An IMA proposes an integrated computing architecture with application software portable across a set of hardware Modules. This imposes multiple requirements on the underlying Real-Time Operating System (RTOS), thus simplifying some software development tasks.

The ARINC653 is an Avionics Standard that complies with the IMA philosophy and that is the most widely used currently. The ARINC653 provides software specification for IMA or Distributed IMA (DIMA), with:
- Partitions: the smallest executable software units in the system. Partitions are independent one from another, in execution and memory management.
- Modules: a hardware component where at least one Partition is executed. The processing resources and memory required to execute Partitions are allocated by the IMA to each Module. In ARINC653 IMA, the physical structure called a Cabinet is used to provide an environmental barrier and to house Modules, processing resources, while a Backplane Bus is used for data transfer between Module in the Cbinet and to an Avoinics Bus.
- In classical ARINC653, an application programming interface (API) called APplication EXecutive (APEX), interfaces each Partition with the underlying operating system. Such Partitions can communicate by using APEX Channels. An APEX Channel is distinct from a physical communication channel connecting a cabinet to the IMA/DIMA network, e.g. Ethernet or the like.

Some technical problems sometimes impair communications among Partitions via APEX Channels in classical ARINC653 IMA. Although simplifying both the hardware structure and the software integration in IMA, the current communication architecture is quite rigid, since many static dependencies are created between Partitions at system configuration time. Such static dependencies cannot be modified during execution time. In fact, since APEX Channels are expected to be entirely defined at system configuration time, the source, destinations, mode of transfer and unique characteristics of each APEX Channel cannot be changed at run-time.

Lots of interconnections among Partitions make them strongly coupled and tend to reduce capabilities such as Reusability, Portability and Scalability which are considered as the main benefits of classical IMA. Due to the strong coupling among Partitions, the system would act as though they were relatively monolithic.

Besides, the nowadays IMA architecture in ARINC653 is somewhat making difficult to implement Fault Tolerance mechanisms. For instance, Reconfiguration is an automated Redistribution of logical element(s) of Partition(s) over physical element(s) distinct from original Module, in case of failure. With ARINC653 IMA, Reconfiguration would be quite difficult to implement, since there is no way to avoid this strict structure at execution time. This also applies to other Fault Tolerance mechanisms, such as e.g. Redundancy.

Willing to implement IMA architecture with ARINC653, a difficulty may occur due to the fact that communications among Modules (processing boards, e.g. line-replaceable units or "LRU") placed in the same Cabinet are carried out through the Backplane Bus, e.g. a Versa Module Eurocard or "VME" Bus. Thus such communications among Modules have to comply with the peculiar features entirely defined at system configuration time, like the source, destinations, mode of transfer and unique characteristics, these feature cannot being changed at run-time.

Furthermore, with classical ARINC653 Partitions that are thought to be communicated exclusively through mechanisms like APEX interface, pseudoports, etc., developing a classical communication mechanism from scratch appears to be a time consuming and complex task. Additionally, as such a communication mechanism would have to maintain the independence among Partitions in order to achieve one of the principles of the ARINC653 specification, developing a new type of flexible communication for selected data, appears somewhat antagonic.

Another difficulty in developing a flexible communication of selected data in an ARINC653 IMA is that it would be highly valuable if this communication could be designed so as to be possibly migrated to larger and real avionics systems.

Furthermore, an IMA / ARINC653 flexible communication may raise other problems, e.g. since the corresponding architecture has to be rapid enough to allow real time communications. Also, the management of spare resources shall be made easier in the IMA /ARINC653 architecture, e.g. when Partitions and / or Spare Partitions have to be added / removed / modified. The capability to adjust / upgrade functionalities in the IMA / ARINC653 architecture would deserve to be enhanced. Finally, it would be useful to make easier and faster synchronizing a "global data space" encompassing a multitude of Modules of the IMA distributed architecture.

In prior art, the document IEEE978-1-4244-2208-1/08 entitled "Distributed IMA and DO-297: Architectural, Communication and Certification Attributes" (Roland Wolfig & Mirko Jakovljevic)", describes a Distributed IMA and evaluated approaches for aerospace. For a safety-critical and secure communication, distributed integration, hierarchical separation, Partitioning and physical distribution in addition to IMA properties like flexibility, modularity, reusability and interoperability are described.

The document "Memory-mapped I/O" (I/O abbreviates "in/out") from Wikipedia, describes methods of performing input/output between a central processing unit or "CPU" and peripheral devices in a computer. Memory-mapped I/O uses the same address Bus to address both memory and I/O devices - the memory and registers of the I/O devices are mapped to (i.e. are associated with) address values. The CPU instructions used to access the memory can also be used for accessing devices. Each I/O device monitors the CPU's address Bus and responds to any CPU access of an address assigned to that device, connecting the data Bus to the desired device's hardware register. A device's Direct Memory Access (DMA) is not affected by CPU-to-device communication methods by memory mapping. This is because by definition DMA is a memory-to-device communication method that bypasses the CPU. See: http:llen.wikipedia.org/wiki/Memory-mapped I/O.

The document W00186442 relates to a communication handling in an IMA, e.g. for the ARINC653 specification. A step of registering a circular outgoing message queue is including another step of abstracting the outgoing message queue to a communication primitive format, when read by the plurality of partitioned applications.

Data Distribution Service (DDS) for real-time distributed systems is a publish/subscribe middleware. This DDS middleware simplifies network programming, by delivering a sample to all subscribers that declare an interest in a given topic. But this delivering relies upon classical channels with the aforementikonned drawbacks. Applications that communicate with DDS are decoupled. See http://en.wikipedia.org/wiki/Data distribution service.

Another Data Distribution Service middleware for ARINC653 is paired with a RTOS that provides an open-standard platform for avionics applications. This Data Distribution Service aims eliminating coupling induced by using hardcoded integration logic, making that applications communicate by publishing / subscribing data. This enhances scalability and system reconfiguration. See http://www.rti.com/company/news/vxworks-arinc-653.htm).

This being said, the background of the invention is exposed. Unlike the art, the existing APEX channels are not used by the flexible and selective communication performed by the invention. The flexible and selective communication, among Partitions of an ARINC653 IMA and as performed by the invention, do not involve APEX channels.

For clarity, the term "communication" is used below for data handling as per the invention, while "data transfer" is used for message handling e.g. through APEX channels or the like Unlike the art, the invention proposes an ARINC653 design and implementation that encourages the distribution of behaviour among Partitions in IMA. In the art, the user functions, resident on an ARINC653 Module, are partitioned with respect to memory space (memory partitioning) and time (temporal partitioning). For resulting Partitions, predetermined area(s) of memory are allocated to each Partition.

The invention proposes decoupling communications among Partitions by using a flexible communication method that avoids a source Partition from having to know about the target Partition(s) and what location in the IMA the targeted Partition(s) occupies. While keeping Partitions not coupled, selected information are communicated smoothly thanks the invention, from one Partition to another Partition in the IMA. Once again, the dedicated communication performed by the invention is an alternative to the usual data transfer by APEX channels.

The invention is defined in the appending claims.

An object of the invention is a method for flexible communication of Message Data in an Integrated Modular Avionics or IMA belonging to a distributed architecture onboard an aircraft.

Said IMA being compliant to the ARINC653 specification, the method is executed through automated processing stages / steps with the aid of a computer system. This computer system has at least:
- a plurality of Modules, each Module having a physical structure including a processing means and a memory means, and
- a plurality of executable software Partitions to be run in a given Module by said processing means; said memory means being divided to implement a Shared Memory for Message Data in Modules.

With the invention, for communication from a Source Partition to at least a Target Partition, this method comprises steps and stages providing:
- a mapping stage having each Shared Memory configured with Shared I/O Memory Regions for Message Data, such as a given Shared I/O Memory Region is assigned to a corresponding Module, thus allowing replicating of Message Data between Modules as a logical communication over said physical structure;
- a limiting stage of installing a Circular Buffer in each Shared I/O Memory Region, so that when said Circular Buffer is saturated, an oldest Message Data previously recorded in the Circular Buffer is overwritten by a new Message Data;
- a regulating stage of installing a Concurrent Algorithm, so that said Concurrent Algorithm only allows Message Data to be written in a given Shared I/O Memory Region if no other Message Data is already being read or written in this Shared I/O Memory Region at the same time;
- a frameworking stage of installing a Communication Framework Middleware in each Partition, generating:
   . a run time stage of executing in run time said Communication Framework Middleware, so that:
   . at a Source preparing step, the Communication Framework Middleware orders the Source Partition to create at least one Topic and a Publisher Component that manages said Topic through which relevant Message Data are linked to said Source Partition, while the Publisher Component creates an Outcoming Local Queue in the corresponding Shared I/O Memory Region for the relevant Message Data to be sent from said Source Partition;
   . at a Target preparing step, said Communication Framework Middleware orders the Target Partition to create at least one Topic and a Subscriber Component that manages said Topic through which relevant Message Data are linked to said Target Partition, while the Subscriber Component creates a Incoming Local Queue in the corresponding Shared I/O Memory Region for the relevant Message Data to be received in said Target Partition;
   . at a Source enabling step, the Publisher Component creates a Data Writer for each Topic; said Data Writer commanding relevant Message Data to be written in the corresponding Outcoming Local Queue of the Source Partition;
   . at a Target enabling step, the Subscriber Component is reading from the Shared Memory of the Module hosting the Target Partition to the corresponding Incoming Local queue, and the Subscriber Component creates a Data Reader for each Topic such that said Data Reader is reading in the corresponding Incoming Local Queue, replicated Message Data that is matching said Topic;
   . at a checking step, said Data Reader checks whether said replicated Message Data matching to said linked Topic is not yet marked as Read.

So, the method provides either:
. a delivering step, if said replicated Message Data matches said linked Topic is not yet marked as Read and if the Concurrent Algorithm has allowed access to the corresponding Shared I/O Memory Regions, involving delivering of said replicated Message Data to the Target Partition and marking of this Message Data as Read; or
. a discarding step, if said replicated Message Data was previously marked as Read, involving discarding of said replicated Message Data.

In an embodiment, the method is executed so that during the delivering step, said delivering of replicated Message Data is operated through a memory queue which is distinct from the Incoming Local queue.

In an embodiment, the method is executed so that the computer system includes a plurality of Modules and a Common Bus for standardized communication among these Modules.

In an embodiment, the method is executed so that the computer system includes at least one physical Bus and the Communication Framework Middleware includes at least a Driver Application for said physical Bus, so that the method (M) allows logical communication of Message Data over said physical Bus.

In an embodiment, the method is executed so that Message Data are chosen from: frequency values, global positioning system or "GPS" position, data from onboard equipment and tracking information related to a particular track point.

In an embodiment, the method is executed so that the Concurrent Algorithm is a Peterson algorithm.

Another object of the invention is a computer system having a distributed architecture of IMA onboard an aircraft and dedicated for executing the method above according to the invention. In that Computer system, is provided at least one Common Bus which is chosen among: VMBus, VME64 and virtual path cross-connect or "VPX".VMEBus and Ethernet Bus.

Another object of the invention is an aircraft having onboard a computer system dedicated for executing the above method according to the invention, said aircraft 1 being a rotary wing aircraft.

Summarizing the invention against the background art, the invention allows communication between Partitions without coupling them. Thus, the invention is able to quickly communicate useful data despite the fact that the source Partition(s) is not aware of the target Partition(s). This is carried out through a categorization of data to be communicated in topics, with an efficient and acute management of relevancy. Unlike the classical transfer via APEX channels, the communication as per the invention is performed through simple read and write operations, independently from such APEX channels.

When a source Partition holds information relevant to a specific topic, it will be read by any Target Partition(s) which has subscribed to this topic. The Source Partition has only to deal with making the information available to the Target(s). The functionality assigned to perform the topics management is implemented in a Middleware allocated in each Partition of the computer system. Therefore, in parallel of having a data transfer mechanism like APEX channels, based on a centralized entity in charge of routing messages between Partitions, this invention proposes a decentralized communication alternative to usual channels, for some dedicated data.

Thanks to the invention, a Publisher in the source Partition represents the entity responsible for such dedicated data issuance, while a Subscriber receives published data and makes it available to the target Partition. Of course, such a Subscriber may receive and dispatch data of a plurality of diverse topics.

The invention and some advantages thereof are detailed from the following specification of exemplifying embodiments which refers to the accompanying figures, in which:
- Figure 1 shows an example of rotary wing aircraft equipped with a computing system IMA compliant to ARINC653 specification, to which the invention is applied;
- Figure 2 is a schematic sequence chart illustrating an example of how the message data are sent by using a flexible communication according to the invention;
- Figure 3 is a schematic sequence chart illustrating an example of how the message data are read by using a flexible communication according to the invention;
- Figure 4 is an example of flowchart illustrating some stages / steps according to the invention, for writing the Module Shared Memory,
- Figure 5 is an example of flowchart illustrating some stages and steps according to the invention, for handling messages by the source Partition,
- Figure 6 is another example of flowchart illustrating some stages and steps according to the invention, for Reading the Module Shared Memory by a given Subscriber Component, and
- Figure 7 is a further example of flowchart illustrating some stages and steps according to the invention, for topic management with related topics selected and with previously read messages discarded after being marked as "read".

Below, are detailed some presently preferred embodiments of the invention. In the figures, the reference 1 generally designates an aircraft. In shown embodiments, the aircraft 1 is a rotary wing aircraft, e.g. a helicopter.

This aircraft 1 comprises one or a plurality of onboard computing systems 2. One or a plurality of integrated modular avionics 3 (IMA) are run onboard the aircraft 1. The IMA 3 is compliant to the ARINC653 specification and forms a Distributed Integrated Modular Avionics (DIMA) on board the aircraft 1.

In this DIMA, the onboard computer system 2 comprises: a series of equipments 4. The system 2 also comprises Partitions 5, at least one Module 6 that contains at least the processing resources (distributed processing means 10) and memory (distributed memory means 11) for executing at least one Partition 5 in this Module 6.

At least one physical cabinet structure 7 forms housing, i.e. an environmental barrier, with at least one hardware Modules 6. Each cabinet contains a backplane used to connect all its processing hardware Modules 6. The different cabinets 7 that comprise the DIMA architecture, are connected among them by using an avionics Common Bus 8 (i.e.: ARINC 429, Ethernet). Each cabinet 7 contains a Backplane used to connect all its processing hardware modules 6. The Backplane does not connect cabinets 7, but links processing Modules 6 in a given cabinet 7.

In data messages, the invention handles selectively various types of information useful to the work for the IMA 3, e.g. for helping the piloting of the aircraft 1, message data are for instance chosen from: frequency values, GPS position and tracking information related to a particular track point.

In some embodiments, the bus 8 is a VMEBus that offers a 32 bit memory model (32 bit data words and 32 bit address Bus). In embodiments, at least one common Bus 8 is chosen among: VMBus, VME64 and VPX.VMEBus.

The invention proposes a method M which is executed in real time through automated processing stages / steps, with the aid of the computer system 2.

In each of the Modules 6, the invention includes a Communication Framework Middleware 12. A mapped Shared Memory 13 is also included. Both Communication Framework Middleware 12 and Shared Mapped Memory 13 are distributed between the various Partitions 5 of each Module 6. The Backplane Bus and the Shared Mapped Memory 13 are quite related. The Backplane Bus is a physical means through which messages are sent, and the Shared Mapped Memory 13 is a logical means used by Partitions 5 for such a message sending.

In the computer system 2 of the invention, there are two types of memory: one that is internal to the module and common to all its allocated partitions. The other is the Shared Mapped Memory 13 that is used to communicate partitions. This Shared Mapped Memory 13 is allocated in the same module 6 or in different modules 6. Again, this Shared Mapped Memory 13 acts as per the invention as a logical interface to the physical means, i.e. the Backplane mentioned above.

Now referring to figures, an embodiment of the method M is exposed. For executing flexible communication of Message Data from a Source Partition 5 to at least a Target Partition 5, the method M comprises various stages and steps.

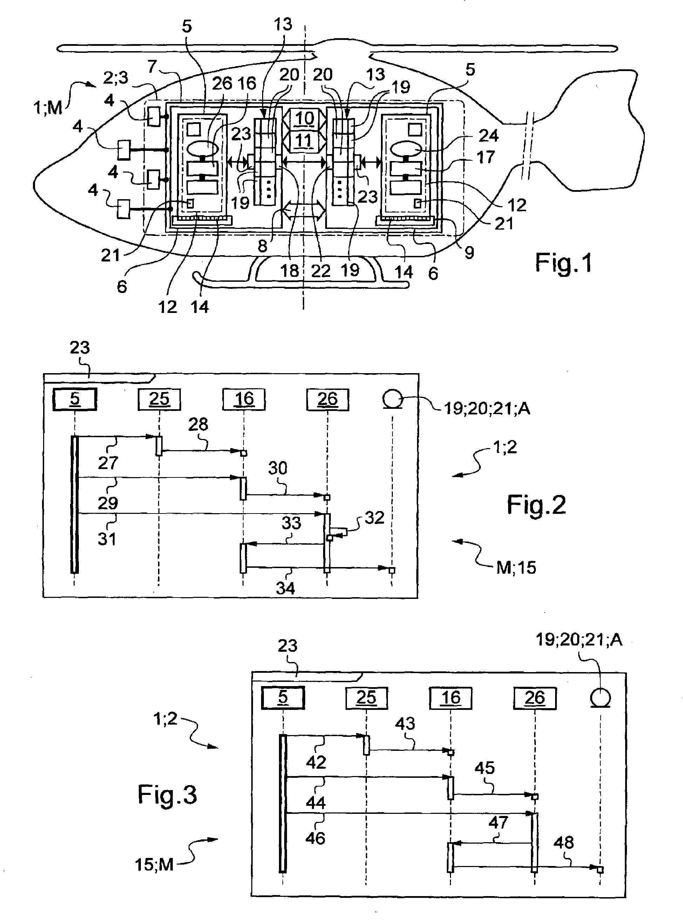

The method M comprises a configuration stage 15. This configuration stage 15 is generally illustrated on figures 2-7, and groups preparing the Computer system 2 to allow it executing the flexible communication according to the invention. The configuration stage 15 includes a mapping stage, a limiting stage, a regulating stage and a frameworking stage to be detailed below, all being generally designated by the same reference number.

In the configuration stage 15, the mapping stage is having each Shared Memory 13 configured with Shared I/O Memory Regions 20 for Message Data. As per mapping stage, a given Shared I/O Memory Region 20 is assigned to a corresponding Module 6. This is allowing replicating of Message Data between Modules 6 as a logical communication over the physical structure of the distributed IMA 3.

The limiting stage also included in the configuration stage 15, involves installing a Circular Buffer 19 in each Shared I/O Memory Region 20. Classically, when said Circular Buffer 19 is saturated with Message Data over its capacity, at least the oldest Message Data previously recorded in the Circular Buffer 19 is overwritten by a new Message Data.

In the configuration stage 15, the regulating stage involves installing a Concurrent Algorithm 23, avoiding problems with concurrent access to this memory. Said Concurrent Algorithm 23 only allows Message Data to be written in a given Shared I/O Memory Region 20 if no other Message Data is already being read or written in this Shared I/O Memory Region 20 at the same time. In some embodiments, the Concurrent Algorithm 23 is a Peterson algorithm. See: http://en.wikipedia.org/wiki/Peterson's algorithm).

Of course, the configuration stage 15 also include a frameworking stage of installing said Communication Framework Middleware 12 in each Partition 5.

Once the configuration stage 15 is achieved, the computer system 2 is implementing the following stages / steps / instances of the method M. In embodiments, the method M provides generating a run time stage of executing in run time said Communication Framework Middleware 12.

During run time stage, at a Source preparing step, the Communication Framework Middleware 12 orders the Source Partition 5 to create at least one Topic 21 and a Publisher Component 16 that manages said Topic 21 through which relevant Message Data are linked to said Source Partition 5, while the Publisher Component 16 creates an Outcoming Local Queue 18 in the corresponding Shared I/O Memory Region 20 for the relevant Message Data to be sent from said Source Partition 5.

During run time stage, at a Target preparing step, said Communication Framework Middleware 12 orders the Target Partition 5 to create at least one Topic 21 and a Subscriber Component 17 that manages said Topic 21 through which relevant Message Data are linked to said Target Partition 5, while the Subscriber Component 17 creates a Incoming Local Queue 22 in the corresponding Shared I/O Memory Region 20 for the relevant Message Data to be received in said Target Partition 5.

Said run time stage also provides that, at a Source enabling step, the Publisher Component 18 creates a Data Writer 26 for each Topic 21; said Data Writer 26 commanding relevant Message Data to be written in the corresponding Outcoming Local Queue 18 of the Source Partition 5.

During run time stage, at a Target enabling step, the Subscriber Component 17 is reading from the Shared Memory 13 of the Module 6 hosting the Target Partition 5 to the corresponding Incoming Local queue 22, and the Subscriber Component 17 creates a Data Reader 24 for each Topic 21 such that said Data Reader 24 is reading in the corresponding Incoming Local Queue 22, replicated Message Data that is matching said Topic 21.

Then the run time stage provides that, at a checking step, said Data Reader 24 checks whether said replicated Message Data matching to said linked Topic 21 is not yet marked as Read.

The result of at said checking step is that the method M provides either:
- a delivering step, if said replicated Message Data matches said linked Topic 21 is not yet marked as Read and if the Concurrent Algorithm 23 has allowed access to the corresponding Shared I/O Memory Regions 20, involving delivering of said replicated Message Data to the Target Partition 5 and marking of this Message Data as Read; or
- a discarding step, if said replicated Message Data was previously marked as Read, involving discarding of said replicated Message Data.

In an embodiment, the Method M at run time stage (during the delivering step), involves that said delivering of replicated Message Data is operated through a memory queue which is distinct from the Incoming Local queue 22.

When the computer system 2 includes a plurality of Modules 6 and a Common Bus 8 for standardized communication among these Modules 6, embodiments provide that the computer system 2 includes at least one physical Bus and the Communication Framework Middleware 12 includes at least a Driver Application for said physical Bus, so that the method M allows logical communication of Message Data over said physical Bus.

Among various types of Message Data that can be communicated as per the invention, examples are Message Data reflecting, e.g: frequency values, GPS position, data from onboard equipment 4 and tracking information related to a particular track point.

With the invention, a Topic 21 is related data transfer is not involving application executive channel (illustrated in 14) such as an APEX, to allow the related data to the relevant Backplane Bus 8. The communication via APEX channels is therefore distinct from the flexible and selective communication performed by the invention, through areas of the Shared Memory.

Besides, the complete memory space also called "global data space" is shared among the different hardware Modules 6 (i.e. boards connected to the common Backplane 8); in such a way that all the hardware Modules 6 connected to the Backplane 8 has a dedicated own memory space where the incoming information is received.

Additionally, each hardware Modules 6 can send information to the other hardware Modules 6 of the IMA 3, through the Backplane Bus 8 just writing in the memory space of the destination hardware Modules 6.

Said run time stage generally includes a Source preparing step, a Target preparing step, a Source enabling step, Target enabling step, a checking step, a delivering step or a discarding step, with the following instances depicted e.g. in figures 2-7.

Regarding an embodiment of the invention, the memory allocated for Backplane Bus 8 in each hardware Modules 6 is organized according to the programming structure "BUFFER_DDS", which includes a queue of so-called "MESSAGE_STRUCT" elements, and the information required to manage the queue according to the concurrent algorithm 23 (e.g. a Peterson's Algorithm:

An example of code for programming this is shown by the chart 1 below:

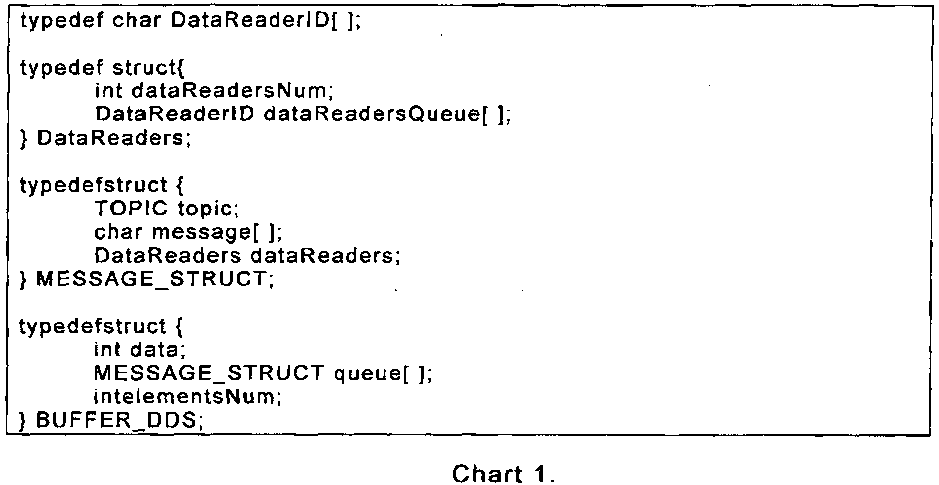

From this chart 1, it appears that "DataReaders" is a memory array that stores information about what "DataReaders" having already read the message. In the chart 2 below, an example of software architecture is such that each Partition 5 allocates a layer of the middleware 12 in charge of performing all communications procedures. This layer adapts the "DDS standard" allowing the invention to use this distributed service standard on architecture of IMA 3. This communication layer, of each given Partition 5, instantiates the "DomainParticipantClass" as the first entry point to "DDS framework".

The communication framework middleware 12 acts as an object factory for both publisher components 16 and subscribers components 17. Both components 16 and 17 include a queue of elements, whose programming structure is depicted by "MESSAGE_STRUCT" element.

**Chart 2: Class Diagram for Communication Software Layer.**

| **Domain Participant** | | | | | | |
|---|---|---|---|---|---|---|
| | | | - domain_id: int | | | |
| | | | - publishersNum: int | | | |
| | | | - SuscribersNum: int | | | |
| | | | + create_publisher():Publisher* | | | |
| | | | + create_suscriber():Suscriber* | | | |
| | | | + create suscriber(char[0.40]): Suscriber* | | | |

| **Publisher** | | | **Suscriber** | | | **Parti tion/ App** |
|---|---|---|---|---|---|---|
| - active Publications: int | | | - elements:int | | | |
| - dwNum:int | | | - id: char[0..20] | | | |
| - etements:int | | | - message Queue: Message_struct [0..100] | | | |
| - message Queue: Message_struct [0..100] | | | | | | |
| | | | - region:void | | | |
| - region:void | | | - shared Region: BUFFER_DDS* | | | |
| - shared Region: BUFFER DDS* | | | - drNum:int | | | |
| - create_datawritter(Topic): DataWritter | | | - create_datareader(Topic): DataReader | | | |
| - enqueue(Message_struct): void | | | - getMessagequeue():Message_struct* | | | |
| | | | - receive(): int | | | |
| - makeAvailable():void | | | | | | |
| - resume_publication():void | | | | | | |
| - suspend publication():void | | | | | | |

| **Message_struct** | | | | | | |
|---|---|---|---|---|---|---|
| | - dataReaders: string[0..20] | | | | | |
| | - message: char [0..10] | | | | | |
| | - t: Topic | | | | | |

| **DataWritter** | | | | | **DataReader** | |
|---|---|---|---|---|---|---|
| - messageQueuePtr: Message_struct* | | | | | - id: char[0..40] | |
| | | | | | - messageNum:int | |
| - publisher: Publisher* | | | | | - s : subscriber | |
| - makeAvailable():void | | | | | - topic: Topic | |
| - topic: Topic | | | | | messageQueue: Message struct[0..50] | |
| - numBem:int* | | | | | | |
| - write(char[0..10]): void | | | **Topics** | | + getMessageNum(): int + read(int*) : Message struct* | |
| | | | -t:topic | | | |

As per the Chart 2, the Publishers include a set of DataWriters (one for each Topic 21 it produces data for). Likewise, Subscribers include a set of DataReaders 24 (one for each Topic 21 it consumes). Therefore, each Partition 5 willing to take part in the distributed framework has to instantiate the class "DomainParticipant". This instance is then responsible of working as an object factory to create instances of both Publisher Classes and Subscriber classes. Additionally, Subscribers work similarly as objects factories to create DataReader instances. As well, the Publisher Components 16 also work as an object factory to create DataWriter instances. Both DataReaders 24 and DataWriters 26 will be associated to a specific Topic 21.

From figures 2 to 7, some embodiments are further detailed. The figure 2 shows an example of how are send data, by using distributed service framework based upon the Data Distribution Service (DDS). From left to right, are shown: a source Partition 5, a "DomainParticipant" 25, a Publisher Component 16, a DataWriter 26 and the Shared memory (19-21). The Datawritter 26 is an object which has a reference to the Publisher Component 16 that created it at an initial instance 27 (CreatePublisher(): Publisher*). Then, is executed the instance 28 "CreatePublisher()". A instance 29 is executed as "CreateDataWritter(topic): DataWritter*". The instance 30 provides "CreateDataWritter()". The instance 31 provides "Writter(message)". The instance 32, which is a loop, provides "GenerateMessageStruct()". The instance 33 provides "Enqueue(Message_Struct)". The final instance 34 provides "PubHshMessage()", thus ending sending in the distributed communication framework 12.

When an application wants to send some data via the distributed service framework, it will call the "write()" process (i.e. an object method) from the DataWriter 26 whose Topic 21 matches the type of message the application would like to send. Then, the DataWriter 26 composes a message and it calls the "enqueue()" process in the Publisher Component 16 to which this DataWriter 26 is bound to. The method M enqueues the message in the messages queue of the Publisher Component 16 (i.e. an "object").

A message is considered as a programming structure that includes the bit stream generated for the data to be sent, the Topic 21 this message corresponds to and an empty array of strings, which will be used latter to store what DataReaders 24 already read that message. The process "publishMessage()" of instance 34 in the Publisher Component 16 copies all new messages into the buffer 19 of the Shared I/O Memory Regions 20. This copying process is carried out during the time slot of the Partition 5 that contains the designated Publisher Component 16.

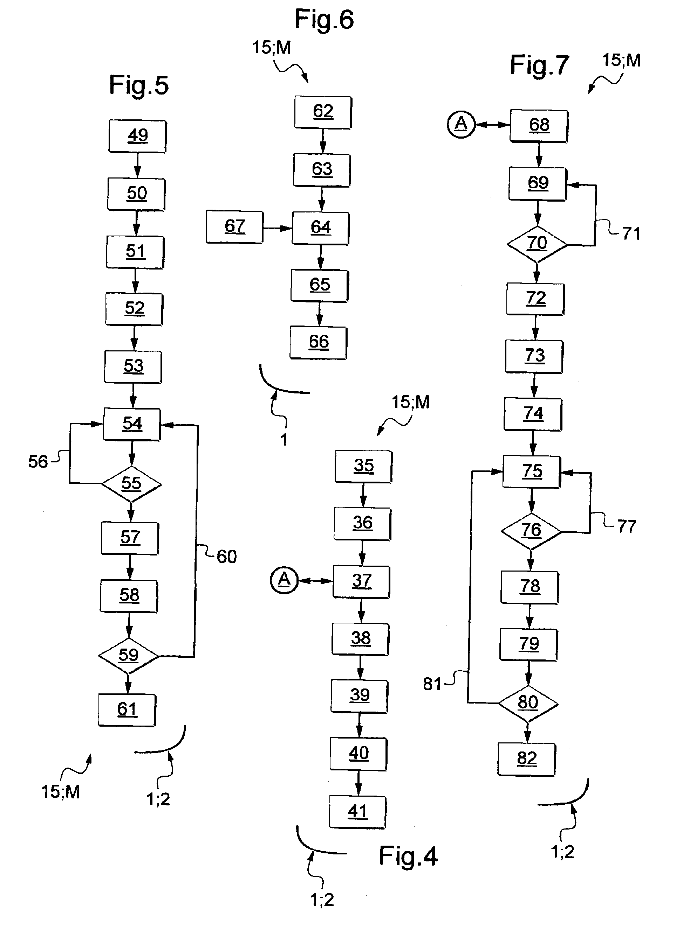

Figure 4 emphasizes the writing the shared memory, as per an embodiment of the invention's method M. An initial instance 35 called "data to send" involves generating of the message data to be transmitted. A further instance 36 called "Command Framework" performs the writing operation. A subsequent instance 37 called "Select Topic of the Message" identifies the related topic 21 of the message, if ever. A following instance 38 called "Generate MESSAGE_STRUCT" initiates the "MESSAGE_STRUCT" programming structure with the information "Message", "Topic" and "Array" to control the access from various readers. A further instance 39 called "Determine Position in Shared Memory" is working out the Position in Shared Memory in which the "MESSAGE_STRUCT" programming structure should be written. A following instance 40 called "Write MESSAGE_STRUCT" involves the actual writing of the "MESSAGE_STRUCT" programming structure in the shared memory. A final instance 41 called "Increase Counter" involves that a counter determining the quantity of messages presently in the shared memory, is updated.

As per figure 4, the memory is organized according to "BUFFER_DDS structure" as defined above. This structure has a variable named "elementsNumbers" which stores the total number of stored messages in Shared I/O Memory Regions 20. This value will allow the method M to determine in which position the new "MESSAGE_STRUCT" should be written. Once, the new message has been inserted, the variable "elementsNumbers" is incremented in one unit (instance 41) and so on. The information in Shared I/O Memory Regions 20 should also be protected in order to avoid different Partitions writing at the same time. That is the reason why the concurrent algorithm 23 is executed to protect against such concurrent accesses.

From figure 3 is shown an example of a series of steps / instances emphasizing how are read the message data by using a flexible communication network, in an embodiment of the invention.

On figure 3, the initial instance 42 operates programming code "CreateSubscriber(): subscriber*". A further instance 43 operates "Create()"programming code. A following instance 44 operates "CreateDataReader(topic): DataReader". A subsequent instance 45 operates "CreateReader(topic)". Then, a instance 46 operates "Read(int): Message_Struct". After instance 46, a instance 47 executes "Receive (message). A final instance 48 provides for "Read(BitStream). This series of instances 42-48 prevents messages to be deleted from the shared memory before all DataReader 24 interested have read it. Also the series of instances 42-48 prevents duplicated readings of a single message.

As per figure 3, when an application wants to read some messages linked to a specific related Topic 21, the method M (communicating stage 15) calls the automated process "read()" from the DataReader 24 instancing for that Topic. This process returns a pointer to an array that includes all the messages previously available for that related Topic 21 checking whether it has been previously read or not. Additionally, the method M receives in an argument passed to the "read()" process an integer pointer that reports how many new messages were read. The DataReaders 24 stores a reference to the Subscriber Component 17 that created it.

When the process "read()" is executed, another programming process of the Subscriber called "receive()" is invoked. This process copies all new messages in the shared memory buffer (19-21) into the messages buffer of the Subscriber. This buffer is then used by the DataReader 24, which then goes through all the elements in the buffer, thus searching for those elements matching the related Topic 21 this DataReader 24 is bound to. When one message is found matching with this Topic, the dataReaders array of this concrete message (see "MESSAGE_STRUCT") is explored to find out whether this DataReader 24 has already read the message or not. If the current DataReader 24 is included in this last array, then the message is discarded. Otherwise, the message is marked including in this array the identifier or "ID" of the current DataReader, and is added to the message queue that is finally delivered to the application.

In each Partition 5 in the IMA 3, a Subscriber Component 17 manages a local copy of the content of the Shared Memory Region. Consequently, at each moment, the Subscriber Component 17 knows through the value of this copy of the variable "elementsNumber", the updated number of messages already read by the Subscriber Component 17. When the Subscriber Component 17 wants to read new messages, this Subscriber Component 17 reads the value of "elements Numbers" in the Shared I/O Memory Regions 20 and calculates the difference between this value and the value of the copy. Thus it determines the number of messages to be read (Shared Memory's "elementsNumber" is always greater than or equal to subscriber's "elementsNumber"). Once the Subscriber Component 17 has read the new messages, the Subscriber Component 17 updates (i.e. increments) the value of its copy of the variable "elementsNumber" to the new total number of messages.

From figure 5, are emphasized instances 49-61 of an embodiment of the invention. This example illustrates another part of the mapping stage 15 of the method M. On figure 5, an initial instance 49 called "Select Topic" provides that the Partition 5 software selects the topic 21 related to the message to be read. A further instance 50 called "Command framework" initiates the performing of the reading operation. A following instance 51 called "Determine Number of Messages" proceeds to determining the quantity of new messages that should be read by the framework. This is done by abstracting the value indicating the number of messages received from the value indicating the number of messages when the last reading operation by the same Partition 5 was finalized. A subsequent instance 52 called "read Messages from shared Memory" involves actual reading of received messages. Then, a instance 53 called "Update Number of Messages" involves increment of the local variable representing the quantity of messages (this quantity being represented by instant value of variable "elementNumber").

A further instance 54 called "Read Array of Messages" instructs that all the arrays are read in order to identify the messages which were read previously. A following instance 55 called "Has this Message been Read ?" involves questioning whether the message presently treated had been read or not. A subsequent instance 56 forms a return loop to instance 54 when the current message have not been read yet. When the current message had been read, a instance 57 called "mark Message as Read" involves tagging the current message, in order to avoid it to be read twice.

A further instance 58 called "Enqueue Message" involves storing the message to be passed to the target Partition 5, once the array has been completely read. A following instance 59 called "Is the Last Message" is questioning whether or not the currently treated message is the last one, or not. If not, a subsequent instance 60 forms a return loop to instance 54, involved when the current message is determined as not being the last one to be treated. Otherwise, if the current message is determined as being actually the last one to be treated, a final instance 61 called "Return Message(s) to Partition" involves the queued messages to be delivered to each convenient Target Partition(s) 5 being then available.

Figure 6 is another flowchart illustrating some stages / instances 62-66 according to the invention, involving reading of the Shared I/O Memory Regions 20. As per this part of the mapping stage 15 of the method M, after an initial instance 62 called "Create Message", a following instance 63 called "Send a Request to DataWritter" is executed. A subsequent instance 64 called "Create Message_Struct data" involves (see reference 67) adding to the message the information signifying the related topic 21 to the considered message, i.e. associated to DataWritter and dataReaders array. Then, a instance 65 called "Send Request to Publisher" provokes emitting a convenient request to the addressed Publisher Component 16. A final instance 66 called "Copy Message_Struct data to Shared Memory" is then executed.

In figure 7 instances 68-82 exemplifies a processing topic management as viewed by the Subscriber Component 17. This part of the mapping stage 15 involves an initial instance 68 called "Select Topic to Read", where a convenient topic 21 is chosen from the catalog A. A following instance 69 called "select DataReader" is executed. A subsequent instance 70 called "Does This DataReader manage this Topic?" questions whether the previously selected DataReader is compatible with the related Topic 21 selected at instance 68. Then, either the selected DataReader indeed manages the related Topic 21 so that the method M proceeds to next instance 72 or this DataReader is not convenient to manage this related Topic 21 so that the method M loops back to instance 69 again, via a return instance 71. Should instance 72 be confirmed, so that now the given Subscriber Component 17 is validated as target, a further instance 73 called "Command Subscriber to Read from Shared Memory" provokes reading in areas of the Shared I/O Memory Regions 20 by this Subscriber Component 17.

A following instance 74 called "Copy new Messages in shared Memory to Local memory" involves transfer of messages toward incoming local memory 22, from shared mapped memory 20 where these messages was previously stacked. A subsequent instance 75 called "Select Message by topic" is executed, before a instance 76 called "Has this message already been read?" This instance 76 is checking whether each of the incoming messages is unread or previously perused. Then, either the message is determined as unread so that the method M proceeds to next instance 78 or this message was already read so that the method M loops back to instance 75 again, via the return instance 77.

A further instance 78 called "Collect Message" involves actual transfer of messages to the incoming local memory 22. A following instance 79 called "Set message as Read by the DataReader (just in local copy)" involves that the read / unread status of the uploaded message is changed correspondingly. A subsequent instance 80 called "Is the last message" questions whether the currently treated message is or is not the last message to be validated as relevant to topic 21, transferred and read. Then, either the message is determined as being the last one so that the method M proceeds to next instance 82 or this message is not the last one to be handled so that the method M loops back to instance 75 again, via another return instance 81. Finally, the instance 82 called "Return messages to Partition" operates the delivery to the relevant target Partition 5.

With the invention, the expression "Return to Partition" or the term "Return" shall not be interpreted as "return back" to the source Partition, but is only intended to mean that the message is actually "delivered" to the target Partition 5. Of course, a message is never returned back to a source Partition 5. If a message was already read by the target Partition, it would be discarded but not "sent back" to the source Partition.

Some valuable advantages of this invention are summarized now. The invention promotes to loose coupling between Partitions 5, so Partitions 5 become more independent. With the invention, the communication between Partitions 5 is based on topics 21, thus increasing relevancy with a reduced transfer volume which leaves more bandwidth to useful information. Source Partitions 5 do not know anything about the target Partition(s) 5 or how later are Target Partition(s) 5 located inside the framework. Also, the target Partitions 5 get information of a specific type without being aware about the senders: therefore, only useful information is provided and handled. Management of spare resources is consequently enhanced. Thanks to the loose coupling, Partitions and spare Partitions can be added / removed / modified in an easier way, as such Partitions 5 depend much less on each other. Implementing Fault Tolerance Mechanisms such as Reconfiguration or Redundancy is easier with the invention, since Partitions 5 are able to communicate independently from the platform where they are executed. Also, the invention improves the capability to add, upgrade or change functionalities. Furthermore, synchronizing the so-called "global data space" in different Modules 6, allows implementing a high-end distributed environment.

The invention is not limited to the embodiments described. Conversely, it includes any equivalents of the described features.

## Claims

1. Method (M) for flexible communication of Message Data in an Integrated Modular Avionics called IMA (3) belonging to a distributed architecture onboard an aircraft (1); said IMA (3) being compliant to the ARINC653 specification, the method (M) being executed through automated processing stages / steps with the aid of a computer system (2); the computer system (2) having at least:
. a plurality of Modules (6), each Module having a physical structure including a processing means (10) and a memory means (11), and
. a plurality of executable software Partitions (5) to be run in a given Module (6) by said processing means (10); said memory means (11) being divided to implement a Shared Memory (13) for Message Data in Modules (6);
**characterized in that**, for communication from a Source Partition (5) to at least a Target Partition (5) the method (M) comprises steps and stages providing:
- a mapping stage having each Shared Memory (13) configured with Shared I/O Memory Regions (20) for Message Data, such as a given Shared I/O Memory Region (20) is assigned to a corresponding Module (6), thus allowing replicating of Message Data between Modules (6) as a logical communication over said physical structure;
- a limiting stage of installing a Circular Buffer (19) in each Shared I/O Memory Region (20), so that when said Circular Buffer (19) is saturated, an oldest Message Data previously recorded in the Circular Buffer (19) is overwritten by a new Message Data;
- a regulating stage of installing a Concurrent Algorithm (23), so that said Concurrent Algorithm (23) only allows Message Data to be written in a given Shared I/O Memory Region (20) if no other Message Data is already being read or written in this Shared I/O Memory Region (20) at the same time;
- a frameworking stage of installing a Communication Framework Middleware (12) in each Partition (5), generating:
. a run time stage of executing in run time said Communication Framework Middleware (12) so that:
. at a Source preparing step, the Communication Framework Middleware (12) orders the Source Partition (5) to create at least one Topic (21) and a Publisher Component (16) that manages said Topic (21) through which relevant Message Data are linked to said Source Partition (5), while the Publisher Component (16) creates an Outcoming Local Queue (18) in the corresponding Shared I/O Memory Region (20) for the relevant Message Data to be sent from said Source Partition (5);
. at a Target preparing step, said Communication Framework Middleware (12) orders the Target Partition (5) to create at least one Topic (21) and a Subscriber Component (17) that manages said Topic (21) through which relevant Message Data are linked to said Target Partition (5), while the Subscriber Component (17) creates a Incoming Local Queue (22) in the corresponding Shared I/O Memory Region (20) for the relevant Message Data to be received in said Target Partition (5);
. at a Source enabling step, the Publisher Component (18) creates a Data Writer (26) for each Topic (21); said Data Writer (26) commanding relevant Message Data to be written in the corresponding Outcoming Local Queue (18) of the Source Partition (5);
. at a Target enabling step, the Subscriber Component (17) is reading from the Shared Memory (13) of the Module (6) hosting the Target Partition (5) to the corresponding Incoming Local queue (22), and the Subscriber Component (17) creates a Data Reader (24) for each Topic (21) such that said Data Reader (24) is reading in the corresponding Incoming Local Queue (22), replicated Message Data that is matching said Topic (21);
. at a checking step, said Data Reader (24) checks whether said replicated Message Data matching to said linked Topic (21) is not yet marked as Read; so that the method (M) provides either:
. a delivering step, if said replicated Message Data matches said linked Topic (21) is not yet marked as Read and if the Concurrent Algorithm (23) has allowed access to the corresponding Shared I/O Memory Regions (20), involving delivering of said replicated Message Data to the Target Partition (5) and marking of this Message Data as Read; or
. a discarding step, if said replicated Message Data was previously marked as Read, involving discarding of said replicated Message Data.

2. Method (M) according to claim 1,
**characterized in that** during the delivering step, said delivering of replicated Message Data is operated through a memory queue which is distinct from the Incoming Local queue (22).

3. Method (M) according to claim 1,
**characterized in that** the computer system (2) includes a plurality of Modules (6) and a Common Bus (8) for standardized communication among these Modules (6).

4. Method (M) according to claim 1,
**characterized in that** the computer system (2) includes at least one physical Bus and the Communication Framework Middleware (12) includes at least a Driver Application for said physical Bus, so that the method (M) allows logical communication of Message Data over said physical Bus.

5. Method (M) according to claim 1,
**characterized in that** Message Data are chosen from: frequency values, GPS position, data from onboard equipment (4) and tracking information related to a particular track point.

6. Method (M) according to claim 1,
**characterized in that** the Concurrent Algorithm (23) is a Peterson algorithm.

7. Computer system (2) having a distributed architecture of IMA (3) onboard an aircraft (1) and dedicated for executing the method (M) according to claim 1,
**characterized in that** the Computer system (2) has at least one Common Bus (8) which is chosen among: VMBus, VME64 and VPX.VMEBus and Ethernet Bus.

8. Aircraft (1) having onboard a computer system (2) dedicated for executing the method (M) according to claim 1, **characterized in that** said aircraft (1) is a rotary wing aircraft.
